# FASCICULE DE BREVET EUROPEEN

(11) **EP 1 331 054 B1**
(45) Date de publication et mention de la délivrance du brevet: **07.06.2006**
(21) Numéro de dépôt: 03000235.6
(22) Date de dépôt: 08.01.2003
(51) Int. Cl.: B23D 35/00, B26D 7/26

(54) **Dispositif de faconnage rotatif d'une matière en bande ou en feuilles**
Vorrichtung zum rotierenden Formgeben von einem Band oder einem Blech
Device for the rotary shaping of a web or a sheet

(30) Priorité: 24.01.2002 CH 1152002
(43) Date de publication de la demande: 30.07.2003
(73) Titulaire: BOBST S.A., 1001 Lausanne (CH)
(72) Inventeur: Cipolli, Marco, 1068 Les Monts-De-Pully (CH)
(74) Mandataire: Poirier, Jean-Michel Serge

(56) Documents cités:
- EP-A- 0 271 229
- EP-A- 1 132 184
- US-A- 5 842 399

## Description

La présente invention a pour objet un dispositif de façonnage rotatif d'une matière en bande ou en feuilles selon le préambule de la revendication 1, au sein d'une machine étant principalement destinée à confectionner des ébauches de boîtes pliantes en papier, carton ou matière plastique dans l'industrie de l'emballage notamment.

Un tel dispositif est connu par example de EP 1 132 184 A.

La transformation d'une bande de carton, par exemple en vue d'en obtenir des découpes de boîtes pliantes, consiste à l'imprimer, à gaufrer les parties devant apparaître en relief, à la refouler aux endroits désirés et à la découper tout en éjectant simultanément les déchets indésirables résultant du découpage. Toutes ces opérations sont réalisées dans autant de stations de traitement successives entraînées en synchronisme qui, ensemble, constituent une machine de production d'emballages.

C'est dans ces dernières opérations de gaufrage, refoulage et découpage que l'invention trouve principalement son utilisation. Chacune de ces opérations utilise des organes rotatifs correspondants qui agissent successivement sur la bande.

Pour décrire l'agencement de telles stations, on prendra en exemple une station de découpage d'une matière en bande par des organes rotatifs généralement constitués d'un outil supérieur de découpage et d'une enclume inférieure lisse cylindrique. L'outil supérieur et l'enclume inférieure, entre lesquels la bande de matière est découpée, sont montés dans des blocs-paliers agencés dans une cassette disposée entre chacun des bâtis latéraux de la machine traitant la bande. Pour les insérer, ces blocs-paliers peuvent coulisser dans le sens vertical entre les bords intérieurs de la cassette constituant la structure portante de ces blocs. Les organes rotatifs inférieurs et supérieurs sont entraînés à la même vitesse angulaire mais en sens inverse l'un par rapport à l'autre par des engrenages de diamètres choisis pour qu'il subsiste une faible distance entre l'outil supérieur et l'enclume inférieure. Pour que l'intervalle qui sépare ces deux organes soit assuré de manière très précise (de l'ordre du µm), chaque extrémité de l'outil supérieur et de l'enclume inférieure comporte une couronne de roulement et un système de réglage fin comprenant des cales de réglage pourvue chacune d'un filetage micrométrique. Les blocs-paliers de l'outil supérieur et ceux de l'enclume inférieure sont reliés entre eux par un dispositif d'accouplement élastique et mis en pression l'un contre l'autre à l'aide de tirants ou de vérins permettant d'appliquer la pression de coupe désirée tout en respectant l'intervalle radial entre les deux organes rotatifs. Un tel dispositif est décrit plus en détail dans le brevet CH691116.

Chaque fabricant de machines possède en général son propre système de cassette insérée au sein de chacune de ses stations de gaufrage, refoulage, découpage ou même d'impression comme le montre le brevet EP0113601. Pour certains fabricants, la cassette de découpage repose sur le fond du logement prévu à son insertion alors que pour d'autres elle se trouve suspendue dans sa partie médiane sur des ergots qui apportent l'avantage de la fixer à un niveau de référence constant, correspondant au plan de passage de la bande ou des feuilles, quel que soit le diamètre des organes rotatifs définissant le format de la découpe.

Certains fabricants ont optés pour un système de cassette constituant un ensemble rigide dans lequel l'outil supérieur de découpage et l'enclume inférieure ont été autant que possible réglés hors machine, alors que d'autres ont conservé des systèmes moins performants, mais tout aussi fiables, qui nécessitent des réglages en machine de la position de ces deux cylindres, non seulement l'un par rapport à l'autre mais également l'un et l'autre par rapport au bâti de la machine. Dans tous les cas il convient en effet de procéder aux réglages minutieux de l'espacement des cylindres, de leur parallélisme et de leur orientation relative dans les plans horizontal et vertical pour pouvoir obtenir un découpage parfait et une usure minimale des filets de coupe. Comme le montre le document FR2556268, il est aussi connu de prévoir un serrage des outils dans leur logement, en exerçant une contrainte sur les organes empilés dans la cassette entre la partie supérieure de cette dernière et le fond du logement du bâti de la machine.

Selon diverses exécutions possibles, lesdites stations sont entraînées soit toutes depuis le même côté de la machine, soit alternativement depuis un côté et depuis l'autre. Dans ce dernier cas, les prises de forces, pour l'entraînement des outils cylindriques des cassettes, ne se trouvent plus toutes du même côté de la machine. L'état de la technique montre aussi que les systèmes d'entraînement eux-mêmes diffèrent totalement en fonction du système de cassette prévu par chaque fabricant. Certains ont recours à un bras réglable, communément appelé "tête de cheval", permettant de pouvoir adapter la position de la roue dentée menante avec celle du pignon de sortie de la cassette, lequel pignon à une dimension qui à chaque fois varie en fonction du diamètre de l'outil de découpage imposé par le format de la découpe demandée par le client. D'autres fabricants ont résolu le problème de l'engrènement encore d'une autre façon, soit par un agencement spécifique de toute la cassette par rapport au bâti de la machine, comme le montre la chaîne cinématique illustrée dans le brevet US4674377, soit par un système d'entraînement indépendant qui est exclusivement dédié à l'unité de découpage rotatif comme le montre le brevet FR2695588. Dans cette dernière illustration de l'état de la technique, le moteur est situé sur l'une des parois latérales de l'unité de découpage, à une hauteur déterminée fixe, et assure l'entraînement direct d'un des outils cylindriques alors que l'autre outil cylindrique doit être déplacé en machine, par un système de leviers, vérin et coussinets excentriques, en direction du premier outil pour pouvoir être à son tour entraîné par la roue dentée de ce dernier.

La grande diversification de tous ces moyens d'entraînement et de tous ces systèmes d'agencement de cassettes au sein de leur station de façonnage, rend un échange d'outils entre machines de différents fabricants totalement impossible. Compte tenu du coût de fabrication très élevé (env. 100'000€) d'une paire d'outils cylindriques spécifiquement conçue pour le façonnage d'un seul type de boîte d'emballage pour un certain format, il se trouve fort peu judicieux qu'un tel échange d'outils ne puisse pas être possible entre de telles machines. Cet inconvénient devient particulièrement contrariant pour une entreprise ou un indépendant qui serait contraint ou souhaiterait devoir changer de marque de machines pour quelle cause que ce soit. Ce même problème se pose aussi à l'entreprise qui souhaiterait agrandir ou renouveler en partie son parc de machines par de nouvelles lignes de production plus performantes produites par un autre fabricant. En présence de plusieurs machines issues de fabricants différents, il serait à l'évidence fort avantageux de pouvoir utiliser un type de cassette aussi bien sur une machine que sur une autre issue d'une marque de fabrique différente. Or, jusqu'à présent, aucune machine de façonnage visant notamment une production d'emballages ne permet d'accepter en son sein un organe étranger d'importance, telle qu'une cassette pour le découpage rotatif provenant d'une machine concurrente.

Partant de cet état de la technique, la présente invention a pour but de supprimer l'inconvénient précité en proposant un dispositif permettant de rendre possible l'échange d'outils de façonnage entre des machines de même type mais de marques différentes. Ce but est atteint grâce à l'agencement, dans chacune des stations de façonnage, d'une cassette d'adaptation présentant une géométrie externe, ou profil, conforme à celle d'une cassette vouée à la machine réceptrice que l'on souhaite employer, et une géométrie interne conforme au profil de la cassette issue de la machine cédante d'où sont tirés les outils que l'on veut pouvoir récupérer. Pour cela, il convient bien sûr de supposer que les machines réceptrice et cédante utilisent a priori des cassettes incompatibles.

Ainsi, l'objet de la présente invention présente l'avantage d'offrir un réel partage d'outils de marques de fabrique différentes a priori incompatibles, de générer une meilleure rationalisation de l'utilisation de ces outils en abaissant sensiblement les coûts d'investissement, de garantir une performance et une qualité de travail au moins égale à celle effectuée par une machine équipée de ses outils originaux, de réduire le temps de travail alloué pour la préparation de la machine en bénéficiant d'outils entièrement préréglés et de ce fait, d'éviter aussi une importante gâche de matière générée lors de toute mise en route mettant en oeuvre de nouveaux outils.

A cet effet, la présente invention a pour objet un dispositif de façonnage rotatif d'une matière en bande ou en feuilles conforme à ce qu'énonce la revendication 1.

L'invention sera mieux comprise à l'étude d'un mode de réalisation pris à titre nullement limitatif et illustré par les figures annexées dans lesquelles:
la figure 1 représente une vue en perspective du dispositif selon l'invention tel qu'intégré dans une machine conventionnelle destinée au façonnage d'une matière en bande notamment,
la figure 2 représente l'objet de la présente invention extrait de la machine illustrée à la figure 1 et équipé d'une paire d'outils cylindriques ordinaires,
la figure 3 représente dans une vue en perspective l'assemblage des principaux éléments constitutifs de l'objet de l'invention illustré à la figure 2,
la figure 4 représente un détail de la figure 1.

Dans le but de définir quelques termes communément employés dans la description qui va suivre pour décrire l'orientation ou la localisation de certaines parties d'objets, on notera que les adjectifs "longitudinal" et "transversal" se réfèrent toujours à la direction principale du défilement de la bande ou des feuilles dans la machine, et que les termes "amont" et "aval" indiquent respectivement le côté le plus proche de l'entrée de la machine et celui le plus proche de la sortie.

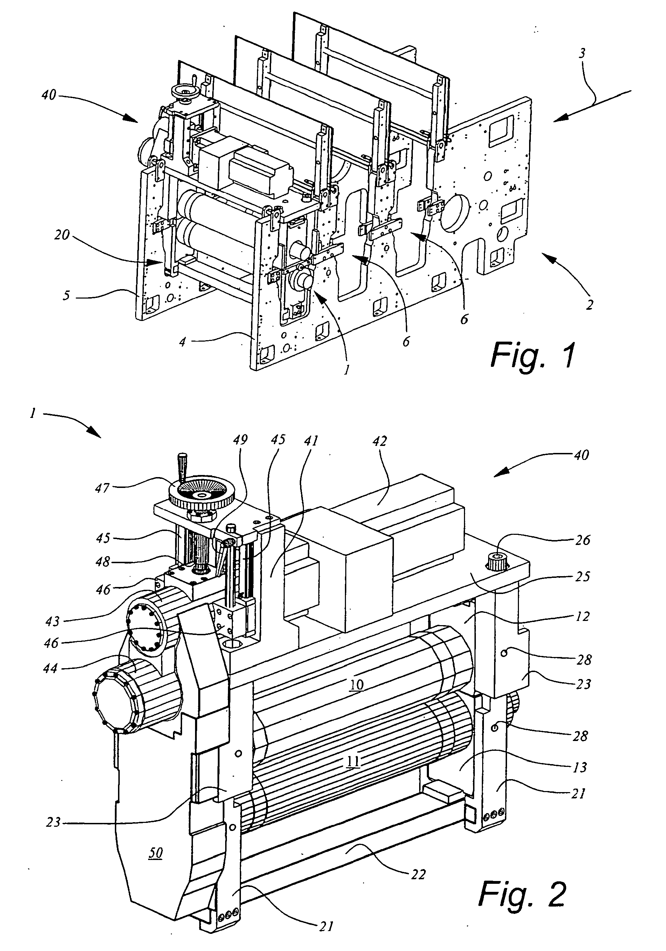

La figure 1 représente une vue en perspective du dispositif 1 de l'invention tel qu'intégré dans une machine conventionnelle 2 destinée au façonnage d'une matière en bande notamment. Le sens de déplacement de la matière (non illustrée) s'opère d'amont en aval selon l'orientation donnée par la flèche 3. Le bâti de la machine 2 est formé essentiellement par deux parois latérales 4 et 5 comprenant de larges ouvertures 6 oblongues et verticales à l'intérieur desquelles viennent successivement se loger les dispositifs de gaufrage, refoulage et découpage. Dans l'illustration donnée à la figure 1, seul le dernier dispositif de façonnage 1 (découpage) s'y trouve inséré.

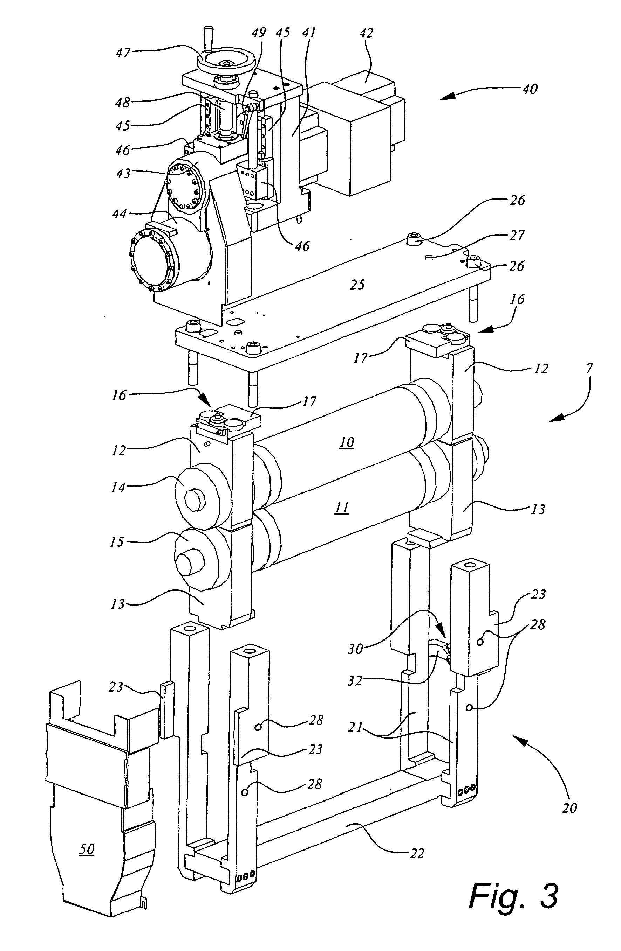

Les figures 2 et 3 représentent, isolément et dans une autre vue en perspective, le dispositif de façonnage 1 équipé d'une cassette ordinaire 7, respectivement sous une forme assemblée et sous une forme éclatée montrant les principaux éléments constitutifs de cet ensemble. La cassette 7 est l'organe d'échange inter-machines pour lequel le dispositif de façonnage 1, objet de l'invention, a été réalisé. Cette cassette est formée d'un outil supérieur de découpage 10 monté dans une première paire de blocs-paliers 12 et d'une enclume inférieure cylindrique 11 montée dans une seconde paire de blocs-paliers 13. En une même extrémité, l'outil supérieur de découpage 10 est entraîné en rotation par le biais d'une roue dentée 14 qui à son tour engrène la roue dentée correspondante 15 de l'enclume inférieure 11. Les deux paires de blocs-paliers 12 et 13 sont fermement maintenus et mis en pression l'un contre l'autre par un double dispositif d'accouplement élastique 16, chacun monté sur une tablette 17 disposée sur chacune des parties supérieures de la paire de blocs-paliers 12.

Afin de pouvoir rendre possible l'interchangeabilité d'outils cylindriques étrangers entre une première machine cédante et une autre machine réceptrice 2 de fabrication différente, la cassette 7 vient se loger dans une cassette intermédiaire, dite cassette d'adaptation 20. Cette dernière a la particularité de présenter un environnement intérieur spécialement conçu pour pouvoir y glisser la cassette contenant les outils cylindriques étrangers et un environnement extérieur conforme aux exigences d'agencement nécessaires pour pouvoir ensuite la loger dans la machine réceptrice 2 au travers de l'ouverture oblongue 6 correspondante. A cet effet, la cassette d'adaptation 20 est préférentiellement constituée de deux paires de montants 21 maintenus ensemble à leur base par une traverse 22. Dans la partie médiane supérieure de chacun de ces montants se trouve un ergot 23 qui, à sa base, constitue un des quatre points d'appui permettant de porter l'ensemble du dispositif de façonnage 1 au sein du bâti de la machine 2.

Dans sa partie supérieure, la cassette d'adaptation 20 est fermée par un couvercle 25 traversé en ses coins par quatre vis de serrage 26 et dans ses extrémités, le long de sa partie médiane, par deux trous filetés 27. Les vis de serrage 26 traversent verticalement chaque partie supérieure des montants 21, alors que les deux trous filetés 27 sont traversés par deux vis de bridage (non illustrées) qui viennent se serrer contre les tablettes 17 de la paire de blocs-paliers 12, maintenant ainsi la cassette 7 dans sa cassette d'adaptation 20.

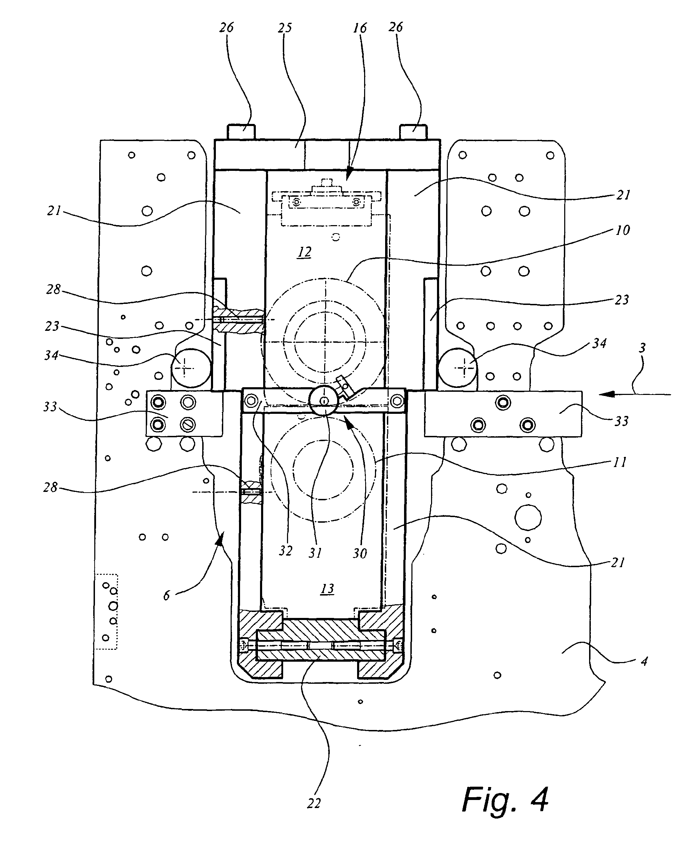

La figure 4 est un détail de la figure 1 qui montre en particulier l'agencement, dans la paroi latérale 4, de la cassette d'adaptation 20 ainsi que les moyens de positionnement et de blocage encore utilisés pour maintenir la cassette 7 dans sa cassette d'adaptation 20 et maintenir cette dernière dans le bâti de la machine 2. Dans cette figure, la cassette 7 est représentée en trait mixte. Les paires de blocs-paliers 12, 13 de la cassette 7 sont positionnés longitudinalement, selon le sens référencé par la flèche 3, contre les montants 21 amont et maintenus dans cette position par des organes simples tels que deux paires de vis 28 traversant horizontalement les montants 21 aval. Dans le sens transversal, un dispositif de positionnement 30, constitué par exemple d'une butée de réglage à vis 31, permet de bloquer la cassette 7 dans une position telle que les engrenages 14, 15 puissent être correctement entraînés. Ce dispositif de positionnement 30 est monté sur une bride 32 reliant les deux montants frontaux 21 dans leur partie médiane.

L'ensemble de la cassette d'adaptation 20 est supporté par les ergots 23 qui reposent sur des appuis 33, rigidement fixés contre les parois latérales 4, 5 du bâti de la machine 2, à une hauteur telle que le fond de la cassette d'adaptation 20 ne repose pas sur le fond de l'ouverture oblongue 6 ménagée dans la paroi du bâti. Le centrage et le calage de la cassette d'adaptation 20 dans son ouverture oblongue 6 est effectué grâce à des organes simples comme des galets excentriques 34 placés de part et d'autre des paires de montants 21. Verticalement, la cassette d'adaptation se maintient avantageusement en place par son propre poids. Toutefois, cela n'exclu pas la possibilité d'y adjoindre un dispositif de fixation supplémentaire si désiré.

Le dispositif d'entraînement 40 est illustré dans les figures 2 et 3. Il est monté coulissant le long d'une colonne verticale 41 fixée rigidement sur la partie supérieure du couvercle 25. Le dispositif d'entraînement 40 comprend essentiellement un moteur 42 dont l'arbre est relié par un accouplement ou un embrayage (non illustré sur les figures) à une première roue dentée, cachée sous le carter 43, qui engrène une seconde roue dentée cachée sous le carter 44. C'est l'ensemble, constitué par le moteur, l'accouplement et les roues dentées de transmission, qui coulisse verticalement le long de deux organes linéaires constitués ici par des rails 45, solidaires de la colonne 41, que suivent deux blocs de guidage 46 fixés au carter 43. Un volant 47 actionne une vis de chariotage 48 et permet de déplacer verticalement le dispositif d'entraînement 40 qui, une fois placé à bonne hauteur, peut être bloqué au moyen d'un levier de blocage 49 par exemple. Grâce à ce déplacement vertical, la seconde ou dernière roue dentée du dispositif d'entraînement 40 peut aisément être positionnée pour qu'elle puisse à son tour engrener la roue dentée 14 de l'outil supérieur de découpage 10 et lui transmettre ainsi la force mécanique développée par le moteur 42. L'engrènement de ces roues dentées étant finalement protégé par un carter 50.

Par ce mode de réalisation, le dispositif de façonnage 1 rassemble en un seul bloc la cassette 7 contenant les outils 10, 11 de la machine cédante, la cassette d'adaptation 20 et le dispositif d'entraînement 40 solidaire de la cassette d'adaptation 20 mais déplaçable verticalement le long d'une certaine course. De ce fait, tous les réglages, y compris ceux nécessaires pour assurer l'entraînement des outils cylindriques et ceux relatifs à leur positionnement par rapport au plan de passage de la matière travaillée, peuvent avantageusement être effectués hors machine. Le dispositif de façonnage 1 est donc prêt à fonctionner directement après son insertion dans la machine 2 et bénéficie d'un assemblage simple de pièces en nombre réduit. De plus, l'agencement tel que décrit du dispositif d'entraînement 40 permet à ce dernier d'être immédiatement adaptable à une large gamme de diamètres de roues dentées 14, 15 sans même devoir ajuster verticalement la cassette d'adaptation qui dans tous les cas se trouve toujours correctement placée par rapport au niveau de passage de la bande de matière à travailler.

La description du dispositif de façonnage, tel que donnée ci-avant, convient parfaitement à une station de découpage mais peut aussi s'adapter à d'autres types d'opérations utilisant également des outils rotatifs similaires, comme le gaufrage, le refoulage ou l'impression par exemple. Bien sûr, l'objet de la présente invention peut aussi être employé simultanément en plus grand nombre pour réaliser successivement ces divers types d'opérations. Dans ce cas, tous les moteurs des dispositifs d'entraînement 40 se trouveraient alors par exemple reliés au moyen d'un arbre électrique qui permettrait d'assurer leur parfaite synchronisation.

De nombreuses améliorations peuvent être apportées au dispositif de cette invention dans le cadre des revendications.

## Revendications

1. Dispositif (1) de façonnage rotatif d'une matière en bande ou feuilles équipant, pour sa transformation, au moins une station de traitement agencée dans une machine (2) produisant notamment des emballages au moyen d'outils cylindriques (10, 11) disposés dans au moins une cassette (7) et mis en rotation par un dispositif d'entraînement (40) pourvu d'un moteur (42), **caractérisé en ce que** ladite cassette (7) est logée dans une cassette d'adaptation (20) amovible et solidaire dudit dispositif d'entraînement (40) disposé sur la cassette d'adaptation (20).

2. Dispositif selon la revendication 1, **caractérisé en ce que** ladite cassette (7) est issue d'un équipement extrinsèque à celui qui outille normalement la machine (2).

3. Dispositif selon la revendication 2, **caractérisé en ce que** la cassette d'adaptation (20) présente un profil interne conçu pour pouvoir y positionner et y fixer la cassette (7), et un profil externe conçu pour pouvoir positionner et fixer la cassette d'adaptation (20) dans la machine (2) sans devoir modifier l'agencement de cette dernière.

4. Dispositif selon la revendication 3, **caractérisé en ce que** la cassette d'adaptation (20) est équipée d'un dispositif de positionnement (30) permettant de bloquer la cassette (7) dans une position autorisant l'entraînement par engrènement de ses outils cylindriques (10, 11).

5. Dispositif selon la revendication 3 **caractérisé en ce que** la cassette d'adaptation (20) est formée de deux paires de montants rendus solidaires d'une traverse (22) fixée à leur base et d'un couvercle (25) fixé à leur extrémité supérieure.

6. Dispositif selon la revendication 5, **caractérisé en ce que** le dispositif d'entraînement (40) est déplaçable verticalement le long d'une colonne (41) fixée au couvercle (25).

7. Dispositif selon la revendication 6, **caractérisé en ce que** l'engrènement des outils cylindriques (10,11) s'effectue par déplacement vertical du dispositif d'entraînement (40).

## Claims

1. A device (1) for the rotary conversion of a web-like or sheet-like material provided, for its conversion, in at least one processing station arranged in a machine (2) for producing packaging by means of cylindrical tools (10, 11) disposed in at least one cassette (7) and rotated by a driving device (40) including a motor (42), **characterized in that** the said cassette (7) is iocated in a removable adaptive cassette (20) secured to said driving device (40) disposed on the adaptive cassette (20).

2. A device according to claim 1, **characterized in that** said cassette (7) is designed for equipment different to that which normally equips the machine (2).

3. A device according to claim 2, **characterized in that** the adaptive cassette (20) has an internal profile shaped to position and fix the cassette (7) therein, and an external profile shaped to position and fix the adaptive cassette (20) in the machine (2) without having to modify the arrangement of the latter.

4. A device according to claim 3, **characterized in that** the adaptive cassette (20) is equipped with a positioning device (30) for blocking the cassette (7) at a position allowing the drive by engagement of its cylindrical tools (10, 11).

5. A device according to claim 3, **characterized in that** the adaptive cassette (20) comprises two pairs of brackets secured to a crossbeam (22) fixed at their bottom region and a lid (25) fixed at their upper end.

6. A device according to claim 5, **characterized in that** the driving device (40) is vertically moveable along a column (41) fixed to the lid (25).

7. A device according to claim 6, **characterized in that** the cylindrical tools (10, 11) are engaged by vertical displacement of the driving device (40).

## Patentansprüche

1. Vorrichtung (1) zum Rotationsstanzen eines bahnförmigen oder bogenförmigen Materials, die zu dessen Bearbeitung Teil mindestens einer Bearbeitungsstation in einer Maschine (2) ist, die insbesondere Verpackungen mit Hilfe zylindrischer Werkzeuge (10, 11) herstellt, die in mindestens einer Kassette (7) angeordnet sind und von einer mit einem Motor (42) versehenen Antriebsvorrichtung (40) in Drehung versetzt werden, **dadurch gekennzeichnet, dass** die Kassette (7) in einer Anpasskassette (20) angeordnet ist, die mit der auf der Anpasskassette (20) angeordneten Antriebsvorrichtung (40) lösbar fest verbunden ist.

2. Vorrichtung nach Anspruch 1, **dadurch gekennzeichnet, dass** diese Kassette (7) von einer anderen Einrichtung stammt als der, die die Maschine (2) normalerweise ausstattet.

3. Vorrichtung nach Anspruch 2, **dadurch gekennzeichnet, dass** die Anpasskassette (20) ein Innenprofil aufweist, das so gestaltet ist, dass darin die Kassette (7) positioniert und befestigt werden kann, und ein Außenprofil aufweist, das so gestaltet ist, dass die Anpasskassette (20) in der Maschine (2) positioniert und befestigt werden kann, ohne dass deren Anordnung geändert werden muss.

4. Vorrichtung nach Anspruch 3, **dadurch gekennzeichnet, dass** die Anpasskassette (20) eine Positioniervorrichtung (30) aufweist, die das Blockieren der Kassette (7) in einer Position erlaubt, die den Antrieb durch Eingriff mit ihren zylindrischen Werkzeugen (10, 11) gestattet.

5. Vorrichtung nach Anspruch 3, **dadurch gekennzeichnet, dass** die Anpasskassette (20) von zwei Trägerpaaren gebildet ist, die durch einen an ihrem unteren Ende befestigten Querbalken (22) und eine an ihrem oberen Ende befestigte Abdeckung (25) fest miteinander verbunden sind.

6. Vorrichtung nach Anspruch 5, **dadurch gekennzeichnet, dass** die Antriebsvorrichtung (40) entlang einer Säule (41) vertikal verschiebbar ist, die an der Abdeckung (25) befestigt ist.

7. Vorrichtung nach Anspruch 6, **dadurch gekennzeichnet, dass** der Eingriff mit den zylindrischen Werkzeugen (10, 11) durch vertikale Verschiebung der Antriebsvorrichtung (40) geschieht.
